# EUROPEAN PATENT APPLICATION

(11) **EP 4 730 371 A1**
(43) Date of publication of application: **22.04.2026**
(21) Application number: 24207911.9
(22) Date of filing: 21.10.2024
(51) Int. Cl.: H01F 27/28, H01F 27/40, H01F 38/14, H02J 50/10, H02J 50/80, H04B 5/22, H04B 5/79, H01F 19/08

(54) **CAPACITIVE COUPLERS AND SYSTEMS THAT INCLUDE CAPACITIVE COUPLERS**

(71) Applicant: Power Integrations, Inc., San Jose, CA 95138 (US)
(72) Inventor: Volke, Andreas, 59494 Soest (DE); Peter, Matthias, 2552 Orpund, Bern (CH)
(74) Representative: Fish & Richardson P.C.

(57) **Abstract**

An electrical system includes an insulating substrate; a magnetic coupler comprising coils disposed on opposites sides of the insulating substrate, wherein the coils are at least partially aligned such that a magnetic field generated by current flow through a first of the coils induces an electromotive force in a second of the coils; and a capacitive coupler having plates disposed on opposites sides of the insulating substrate, wherein the plates comprises elongate conductors that are coupled together without forming loops and arranged at least partially beneath or in an interior of the coils of the magnetic coupler on the insulating substrate

## Description

### TECHNICAL FIELD

This relates to capacitive couplers, for example, capacitive couplers that can be used to communicate across galvanic isolation in power converters.

### BACKGROUND

In an electrical system, it is often desirable to galvanically isolate electrical components and circuits from one another. For example, portions of an electrical system can be galvanically isolated from one another to establish different voltage domains in those portions. A common example is the galvanic isolation of portions of an electrical system that handle relatively high line voltages from portions that handle relatively lower voltages. By galvanically isolating some electrical components and circuits from the line voltages, the isolated electrical components and circuits are protected from the line voltages. Components with lower voltage and current ratings can be used in the portions that handle relatively lower voltages. Also, safety can be improved in that humans who interact with the isolated, lower voltage portions of the system can be protected from inadvertent exposure to high currents and voltages.

However, the electrical components and circuits in the electrical system must interoperate notwithstanding the galvanic isolation. In general, power and/or information may be communicated between the galvanically-isolated portions of the system in the course of interoperation.

A variety of different approaches have been used to communicate across galvanic isolation. Examples include approaches that rely upon magnetic fields (e.g., transformers and coupled inductors), light (e.g., optocouplers), and electric fields (e.g., capacitive couplers). Regardless of the approach that is used, it should satisfy the operational requirements of the application. These include not only the magnitude of the voltages that must be withstood, but also, e.g., size, geometry, lifespan, efficiency, and-in the case of information- bandwidth and error rate. For example, capacitive couplers that are subject to changing electric fields will often be unsuited for communications.

### DESCRIPTION OF DRAWINGS

FIG. 1 is a schematic representation of a view of a capacitive coupler from above.
FIGS. 2, 3 are schematic representations of cross-sections of the capacitive coupler shown in FIG. 1.
FIG. 4 is a schematic representation of one application of capacitive couplers in the context of an electrical system.
FIG. 5 schematically represents a cross-section of the electrical system of FIG. 4.
FIG. 6 is a schematic representation of another application of capacitive couplers in the context of an electrical system.
FIG. 7 schematically represents a cross-section of the electrical system of FIG. 6.
FIG. 8 is a schematic representation of a cross-section of portions of a capacitive coupler and a magnetic coupler.
FIG. 9 is a schematic representation of a galvanically-isolated switching power converter that includes an electrical system of FIG. 4 or FIG. 6.

Like reference symbols in the various drawings indicate like elements.

### DETAILED DESCRIPTION

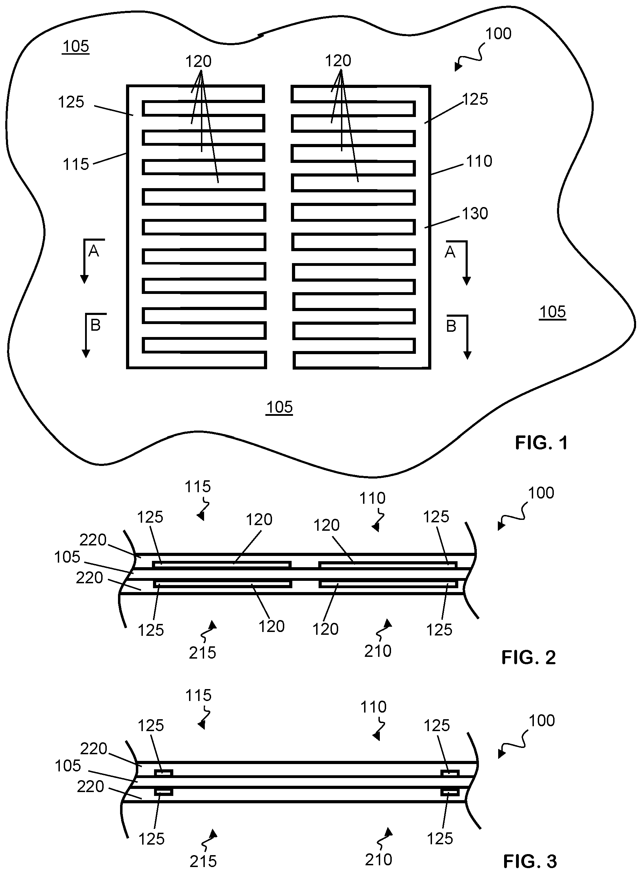

FIG. 1 is a schematic representation of a view of a capacitive coupler 100 from above. The illustrated capacitive coupler 100 includes a first patterned conductor 110 and a second patterned conductor 115 both formed on a side of a dielectric substrate 105. Each patterned conductor 110, 115 acts as a "plate" of a respective capacitor of capacitive coupler 100. Dielectric substrate 105 is interposed between the "plates" of the capacitors to isolate them from one another. Capacitive coupler 100 thus includes two capacitors, one to the left in the illustrated orientation and one to the right, with only a single "plate" of each capacitor visible. However, unlike traditional plates, conductors 110, 115 are patterned and formed from a series of relatively thin, elongate conductive portions 120, 125. The width of elongate conductive portions 120, 125 parallel to the surface of substrate 105 (i.e., parallel to the plane of the page) is selected to impair generation of eddy currents within patterned conductor 110, 115 when they are subject to magnetic fields. For example, conductive portions 120, 125 are typically greater that 5 mil (0.12 mm) wide, for example, between 5 and 12 mil (between 0.12 and 0.3 mm) wide. As discussed further below, capacitive couplers can be used to communicate data signals in environments with high magnetic fields that are used to communicate power. In such environments, eddy currents can arise in the capacitive couplers and reduce the efficiency of power transmission.

In some implementations, the illustrated layer of capacitive coupler 100 can include a sandwich-like structure of conductive and insulating layers. For example, patterned conductors 110, 115 can be conductive traces that have been etched or otherwise patterned and between 0.2 mm and 2.3 mm thick, for example, between 0.3 and 0.6 mm thick, perpendicular to the surface of substrate 105. Dielectric substrate 105 itself can include one or more non-conductive layers that form a solid support. In some implementations, dielectric substrate 105 can withstand a more than 1000 volt difference across it, for example, more than a 2000 volt difference or more than a 3000 volt difference. In general, patterned conductors 110, 115 will also be covered by a protective layer such as an encapsulant or laminate (not labeled in FIG. 1). However, this is not necessarily the case and in some implementations patterned conductors 110, 115 can be external layers. In some implementations, capacitive coupler 100 can be formed using printed circuit board technology. For example, patterned conductors 110, 115 can be etched copper layers. Substrate 105 can include one or more resin-impregnated paper or cloth layers, e.g., one or more FR4 printed circuit board bases. If substrate 105 includes multiple layers, they can be laminated, glued, or otherwise joined together.

The conductive portions 120, 125 in the illustrated implementation of patterned conductors 110, 115 form a generally E-shaped or comb-shaped pattern, with conductive portions 125 acting a conductive backbone or "shaft" and conductive portions 120 branching off of a respective of conductive portions 125 as parallel "teeth." Other implementations of patterned conductors 110, 115 are possible including, e.g., dendritic patterned conductors, tree-shaped patterned conductors, asterisk-shaped patterned conductors, and combinations of these and other patterns.

Regardless of the patterning, patterned conductors generally do not include conductive portions that cross, loop, or otherwise intersect to form structures that allow electrical current flow to loop. For example, if an additional conductive portion akin to conductive portion 125 were to be added to the open side of patterned conductors 110, 115 to form closed, grill-like patterned conductors, then electrical current could flow in a closed loop. For example, referring to the illustrated orientations, electrical current could flow leftward in a first conductive portion 120, downward through a relevant length of the connected conductive portion 125, rightward through a second conductive portion 120, and upward through the relevant length of the additional conductive portion to return to the first conductive portion 120. Such a loop could support eddy currents that impair the efficiency of power transfer by magnetic fields.

Also, the resistance between the site at which other circuitry is coupled to patterned conductors 110, 115 and the remainder of patterned conductors 110, 115 is low enough that patterned conductors 110, 115 are biased at the same time, with no significant potential differences in different portions of patterned conductors 110, 115. In particular, the distributed resistance of the conductive portions 120, 125 is effectively in series with the capacitance between those portions. If the resistance were too high, dynamic charging and discharging effects could arise. However, in general, with the dimensions described above and metallic conductive portions 120, 125, these effects are minor and can be ignored.

As an aside, none of the assumptions described above necessarily apply to patterned conductors 110, 115 or other patterned conductors. For example, some patterned conductors may vary in composition, width, and/or thickness along their length. Also, conductive portions may vary in length and/or number. By tailoring such parameters, the resistance between the site at which other circuitry is coupled to patterned conductors and the remainder of patterned conductors can be maintained reasonably uniform while simultaneously reducing eddy currents when subject to magnetic fields.

FIG. 2 is a schematic representation of a cross-section of capacitive coupler 100 along AA in FIG. 1 and FIG. 3 is a schematic representation of a cross-section of capacitive coupler 100 along BB in FIG. 1. Unlike FIG. 1, FIGS. 2, 3 show the patterned conductors 210, 215 that act as the other "plates" of the capacitors of capacitive coupler 100.

In more detail, patterned conductors 210, 215 are disposed on the opposite side of dielectric substrate 105 from patterned conductors 110, 115 and isolated therefrom by dielectric substrate 105. Like patterned conductors 110, 115, patterned conductors 210, 215 are patterned and formed from a series of relatively thin, elongate conductive portions 120, 125. In general, the conductive portions 120, 125 of patterned conductors 210, 215 are directly opposite corresponding conductive portions 120, 125 of patterned conductors 110, 115. This minimizes the separation distance between the conductive portions 120, 125 and increases the capacitance of the coupling between patterned conductor 110, 210 and between patterned conductor 115, 215.

Like conductive portions 120, 125 in patterned conductors 110, 115, the dimensions of conductive portions 120, 125 in patterned conductors 210, 215 are selected to reduce eddy currents when subject to magnetic fields. Also, conductive portions 120, 125 in patterned conductors 210, 215 are generally arranged to avoid electrical current loops and maintain the resistance between the site at which other circuitry is coupled to patterned conductors 210, 215 and the remainder of patterned conductors 210, 215 reasonably uniform.

In one example, patterned conductors 110, 115, 210, 215 are arranged directly on substrate 105 and encapsulated or laminated with respective insulator layer 220. Example insulator materials include those used in printed circuit board technology. In one embodiment, patterned conductors 110, 115 may be formed on one circuit board while patterned conductors 210, 215 are formed on another circuit board. These circuit boards may be adhered to each other with insulating material. In further embodiments, the circuit boards with patterned conductors 110, 115 and 210, 215 may be multi-layer circuit boards.

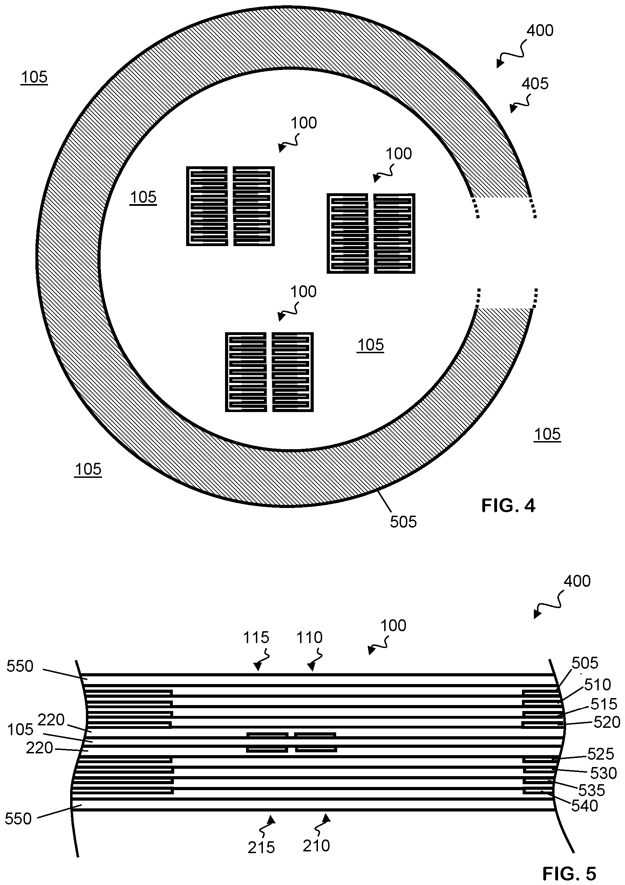

FIG. 4 is a schematic representation of one application of capacitive couplers 100 from above in the context of an electrical system 400. FIG. 5 schematically represents a cross-section of electrical system 400.

The illustrated electrical system 400 includes three different capacitive couplers 100 and a magnetic coupler 405. Magnetic coupler 405 is a coupler that can communicate power and/or information across the same insulating substrate 105 on which capacitive couplers 100 are formed. Transformers, inductors, coupled inductors are examples of magnetic couplers. Capacitive couplers 100 and magnetic coupler 405 provide parallel paths for communicating power and/or information across galvanic isolation.

In the illustrated implementation, capacitive couplers 100 are positioned within aligned conductive coils or windings of magnetic coupler 405. In more detail, magnetic coupler 405 includes two series of conductive traces 505, 510, 515, 520 and 525, 530, 535, 540. Each conductive trace defines a looped pattern in a respective layer. Although conductive trace 505 is illustrated from above as a circular loop, other implementations of conductive traces can be oval, triangular, rectangular, pentagonal, hexagonal, ... -- with either rounded or pointed vertices. Further, in some implementations, more than one loop is found in a layer. For example, conductive traces can be formed in spiral patterns in a single layer. In any case, each series of conductive traces forms a conductive coil, with the conductive traces in the series forming turns of the conductive coils. There is one coil on each side of substrate 105. In general, conductive traces 505, 510, 515, 520, 525, 530, 535, 540 are stacked vertically above and below substrate 105 and at least partially aligned with one another. Each trace 505, 510, 515, 520, 525, 530, 535, 540 can be formed in a separate printed circuit board layer and laminated with an insulator. In some implementations, a substrate on which capacitive couplers 100 and magnetic coupler 405 are formed can be laminated with an outer protective layer 550. In one example, magnetic coupler 405 is a planar magnetic coupler. In one embodiment, patterned conductors 110, 115 and conductive traces 505, 510, 515 and 520 are formed in one multi-layer circuit board while patterned conductors 210, 215 and conductive traces 525, 530, 535, 540 are formed in another multi-layer circuit board. These multi-layer circuit boards may be adhered to each other with an insulating material.

To interconnect the turns of the coils, each trace is electrically connected with neighboring trace(s) by inter-layer via(s) (not shown). In particular, traces that form turns in the middle of the coils (i.e., traces 510, 515, 530, 535) will be electrically connected to two neighboring traces by two respective inter-layer vias, whereas traces that form outer turns of the coils will be electrically connected to a single neighboring traces by a single inter-layer via. The interconnections allows electric current to be driven in a generally spiral pattern in either direction through either of the coils. By way of example, the interconnections allows electric current to be driven around trace 505, through an inter-layer via down to trace 510, around trace 510, through an inter-layer via down to trace 515, through an inter-layer via down to trace 515, around trace 515, through an inter-layer via down to trace 520, and around trace 520 in an approximately spiral pattern. Flow of an electric current through either one of the coils-in either direction- generates a magnetic field that induces an electromotive force in the other of the coils. The magnetic field can be used to communicate power, information, or both power and information across insulating substrate 105.

Despite the superposition of the magnetic fields generated by traces 505, 510, 515, 520 or traces 525, 530, 535, 540 at the interior of their respective coil, capacitive couplers 100 are positioned at the interior of the coils where the magnetic fields are relatively high. In the illustrated implementation, three capacitive couplers 100 are disposed in insulator layers 220 on substrate 105 and immediately adjacent to the layers in which traces 520, 525 are formed. In other words, in the orientation illustrated in FIG. 5, the coil formed by traces 505, 510, 515, 520 is slightly "above" the level of capacitive couplers 100 and the coil formed by traces 525, 530, 535, 540 is slightly "below" that level. However, the magnetic fields generated by the traces remains relatively high.

As an aside, in other implementations, the top and bottom turn of these coils can be formed in the same insulator layers 220 as capacitive couplers 100. In this case, the magnetic fields generated by the traces could be even higher.

As discussed above, the patterned conductors that form capacitive couplers 100 have characteristics that impair the generation of eddy currents. Despite their exposure to the relatively large magnetic fields within magnetic coupler 405, capacitive couplers 100 can still communicate even relatively low-power data signals at the same time that magnetic coupler 405 is used to communicate power. This saves space in electrical system 400, e.g., by reducing the "footprint" of the power and information channels on a printed circuit board.

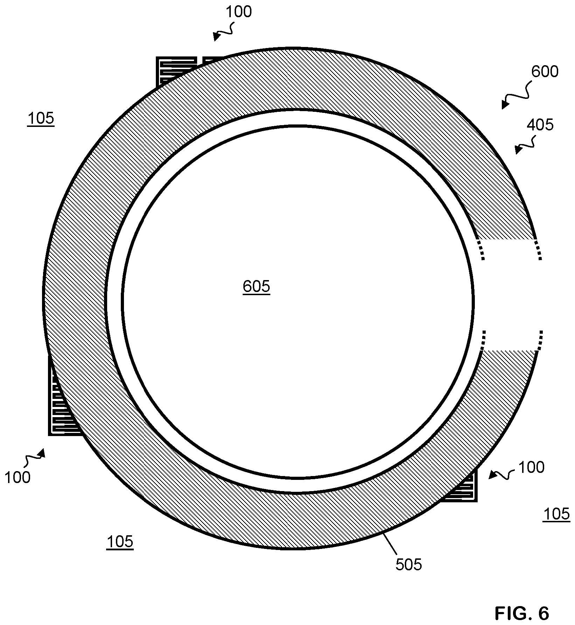

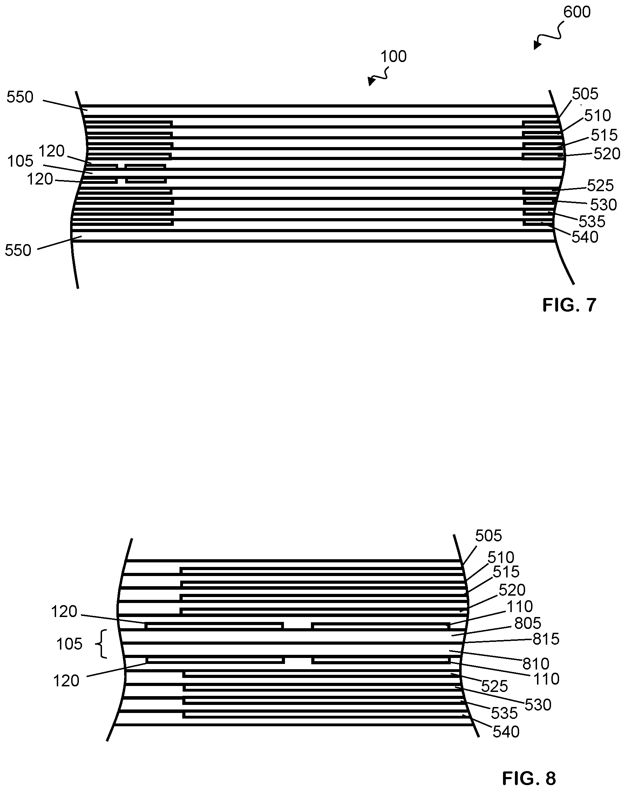

FIG. 6 is a schematic representation of another application of capacitive couplers 100 in the context of an electrical system 600. FIG. 7 schematically represents a cross-section of electrical system 600.

The illustrated electrical system 600 again includes three different capacitive couplers 100 and magnetic coupler 405. However, substrate 105 defines a hole 605 at the interior of the loops formed by conductive traces 505, 510, 515, 520 and 525, 530, 535, 540. Hole 605 is dimensioned to allow a magnet core to be passed through substrate 105 with loops. The core increases the magnetic coupling between the loops on the opposite sides of substrate 105. In one example, the magnetic coupler 405 may be a planar magnetic coupler.

With hole 605 at the interior of the loops, capacitive couplers 100 are displaced from the interior and are instead positioned, in whole or in part, between conductive traces 520, 525. For example, the patterned conductors 120 which form capacitive coupler 100 may be disposed within the footprint of the loops formed by the magnetic coupler 405. The three capacitive couplers 100 can be disposed in insulator layers 220 on substrate 105 above or below the layers in which traces 520, 525 are formed. In the orientation illustrated in FIG. 7, traces 505, 510, 515, 520 are above at least a portion of capacitive couplers 100 and traces 525, 530, 535, 540 are below at least a portion of capacitive couplers 100. It should be appreciated that embodiments of the present disclosure may include one or more intermediate layers between the capacitive couplers and traces 505, 510, 515, 520 and/or traces 525, 530, 535, 540. A shield layer is one example if an intermediate layer. In the illustrated implementations, the insulator layers 220 in which capacitive couplers 100 are disposed are directly adjacent to the layers in which traces 520, 525 are formed, with no intervening layers. In other implementations, other layers intervene between insulator layers 220 and the layers in which traces 520, 525 are formed. In some such implementations, a conductive shield layer can intervene between insulator layers 220 and the layers in which traces 520, 525 are formed. The conductive shield in the shield layer can be connected to a supply or ground voltage. In some implementations, the conductive shield can be patterned to cover capacitive couplers 100 while leaving other portions uncovered.

In one embodiment, patterned conductors 110, 115 and conductive traces 505, 510, 515 and 520 are formed in a multi-layer circuit board while patterned conductors 210, 215 and conductive traces 525, 530, 535, 540 are formed on another multi-layer circuit board. These multi-layer circuit boards may be adhered to each other with an insulating material.

Although traces 520, 525 are part of magnetic coupler 405, traces 520, 525 are also capacitively coupled across substrate 105 and traces 520, 525 act as "plates" of another capacitive coupler. Further, the electric fields between traces 520, 525 are highest where capacitive couplers 100 are between traces 520, 525. Despite their exposure to the relatively large electric fields between traces 520, 525 of magnetic coupler 405, capacitive couplers 100 can still communicate even relatively low-power data signals at the same time that magnetic coupler 405 is used to communicate power. Further, with a core disposed in hole 605, the magnetic coupling between the conductive coils of magnetic coupler 405 is improved.

FIG. 8 is a schematic representation of a cross-section of portions of capacitive coupler 100 and magnetic coupler 405. As shown, patterned conductors 110 are entirely disposed between traces 520, 525, whereas patterned conductors 120 extend laterally beyond traces 520, 525. In other implementations, the entirety of both patterned conductors 110, 120 entirely disposed between traces 520, 525.

Further, in the illustrated implementation, substrate 105 is formed by joining a first dielectric layer 805 to a second dielectric layer 810 at a generally-planar joint 815. Joint 815 can be formed by gluing, fusing, laminating, or otherwise joining superposed dielectric layers 805, 810. For example, in some implementations, each dielectric layer 805, 810 can be a resin-impregnated paper or cloth layer, e.g., an FR4 printed circuit board base. In other words, substrate 105 can be formed by joining two single-sided printed circuit board bases together, back-to-back, at joint 815.

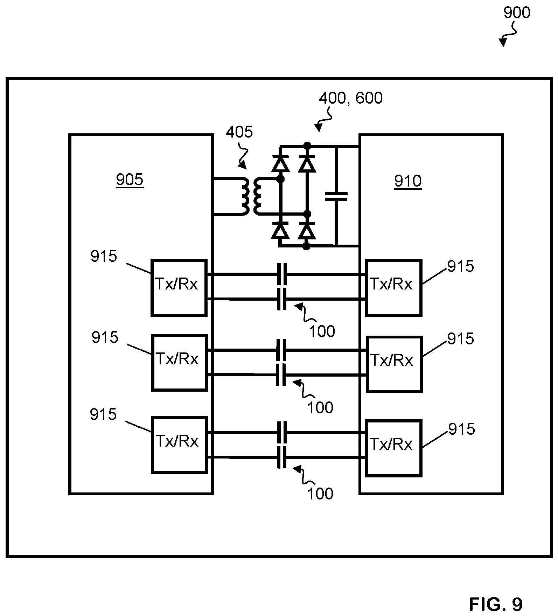

FIG. 9 is a schematic representation of a galvanically-isolated switching power converter 900 that includes either of electrical systems 400, 600. In power converter 600, magnetic coupler 405 acts as a power transfer element that transfers power from the primary (or input) side 905 of power converter 900 to the secondary (or output) side 910 of power converter 900, with one coil coupled to the primary side and the other to the secondary side. Current flow through the coil of magnetic coupler 405 that is coupled to the primary side can be controlled by switching a power switch, e.g., an IGBT, FET, or BJT or other transistor implemented in silicon, GaN, SiC, or other material (not shown).

Each capacitive coupler 100 can be part of a respective channel that communicates information between primary side 905 and secondary side 910. The communicated information can relate to, e.g., regulation of the output of the power converter (e.g., feedback information, error signals, switching request signals), operational parameters of the power converter (e.g., error or fault signals, temperature information, operational setpoints, trimming signals), or the like. Capacitive couplers 100 can be part of either uni-directional or bidirectional communication channels and coupled to associated transmission, reception, and/or transceiver circuitry 915. The capacitors in each capacitive coupler 100 can be coupled in a differential arrangement in its communication channel. In other words, the potential across one of the capacitors in capacitive coupler 100 can serve as a reference against which the potential across the other of the capacitors in capacitive coupler 100 is measured. Noise and other voltage swings that are common to both capacitors is rejected but any signal that applied to one but not the other can be selectively amplified.

In operation, magnetic coupler 405 communicates power across substrate 105 and capacitive couplers 100 communicate information. For example, electrical current flow through one of the coils of magnetic coupler 405 is typically switched at frequencies ranging between a few kHz to 1000's of kHz, e.g., between 1 kHz to and 1000 kHz. Data can be transmitted as, e.g., individual pulses, modulated signals, or the like. In some implementations, data is transferred using transmission or carrier signals in the range of MHz to GHz, for example, between 50 MHz and 1 GHz. In general, the higher the frequency of the data signals and the larger frequency difference between the data signals and the switching frequency of the magnetic coupler 405, the easier it is to discriminate the information in the data signals from the power switching and other noise.

A number of implementations have been described. Nevertheless, it will be understood that various modifications may be made. For example, although the illustrated implementations include only a single coil on each side of substrate 105, other implementations include multiple coils on one side of substrate 105, each formed by a respective series of conductive traces. For example, in some implementations, the primary side of a power converter can include both a primary winding and an auxiliary winding that is coupled to provide a relatively lower supply voltage to primary-side circuitry. As another example, in some implementations, the secondary side of a power converter can include both a main secondary winding and an auxiliary secondary winding that is coupled to provide a relatively lower supply voltage to secondary-side circuitry. As yet another example, in some implementations, the secondary/output side of a multi-output power converter can include multiple output windings with different numbers of turns.

Accordingly, other implementations are within the scope of the following claims.

Although the invention is defined in the claims, other aspects of this technology are defined by the following examples.

Example 1. An electrical system comprising:an insulating substrate;a magnetic coupler comprising coils disposed on opposites sides of the insulating substrate, wherein the coils are at least partially aligned such that a magnetic field generated by current flow through a first of the coils induces an electromotive force in a second of the coils; anda capacitive coupler having plates disposed on opposites sides of the insulating substrate, wherein the plates comprises elongate conductors that are coupled together without forming loops and arranged at least partially beneath or in an interior of the coils of the magnetic coupler on the insulating substrate.

Example 2. The electrical system of example 1, wherein the capacitive coupler comprises two capacitors each having two plates, wherein the plates of each capacitor are disposed on opposites sides of the insulating substrate.

Example 3. The electrical system of example 1 or 2, wherein:the insulating substrate includes a printed circuit board base; and the plates of the capacitive coupler are in a single printed circuit board layer.

Example 4. The electrical system of any one of examples 1 to 3, wherein:the insulating substrate includes a printed circuit board base; and the coils of the magnetic coupler comprise conductive traces disposed in multiple printed circuit board layers and coupled together by inter-layer vias.

Example 5. The electrical system of any one of examples 1 to 4, wherein the elongate conductors of a first of the plates are directly opposite, on opposites sides of the insulating substrate, corresponding elongate conductors of a second of the plates.

Example 6. The electrical system of any one of examples 1 to 5, wherein the elongate conductors are between 0.05 mm and 0.3 mm wide in a plane of the insulating substrate.

Example 7. The electrical system of any one of examples 1 to 6, further comprising:a second capacitive coupler having plates disposed on opposites sides of the insulating substrate and arranged at least partially beneath or in the interior of the coils of the magnetic coupler on the insulating substrate.

Example 8. A switching power converter, wherein:the switching power converter comprises an electrical system according to any preceding example;the coils of the magnetic coupler are primary and secondary windings of a power transfer element that is coupled to transfer power from a primary side of the power converter to a secondary side of the power converter; anda first plate of the capacitive coupler is coupled to data transmission circuitry; and a second plate of the capacitive coupler is coupled to data reception circuitry. Example 9.The switching power converter of example 8, wherein: the capacitive coupler comprises two capacitors each having two plates; and the data reception circuitry is configured to reference voltage measurements on the second plate to voltage of a plate of a second of the capacitors.

Example 10. The switching power converter of example 8 or 9, wherein: the switching power converter is configured to switch a power switch to control current flow through the primary winding at a frequency between 1 kHz and 25 MHz; and the data transmission circuitry is configured to transmit signals at a frequency between 50 MHz and 1 GHz.

Example 11. A multilayered circuit comprising:a printed circuit board substrate; anda capacitive coupler, the capacitive coupler including a pair of capacitors each having one plate disposed on a first side of the printed circuit board substrate and another plate disposed on a second, opposite side of the printed circuit board substrate, wherein each plate comprises elongate, conductive traces in a layer of the printed circuit board.

Example 12. The multilayered circuit of example 11, wherein the conductive traces are between 0.05 mm and 0.3 mm wide in a plane parallel to the printed circuit board substrate.

Example 13. The multilayered circuit of example 11 or 12, wherein the elongate, conductive traces are coupled together in the layer of the printed circuit board without forming loops.

Example 14. The multilayered circuit of any one of examples 11 to 13, further comprising:a magnetic coupler comprising aligned conductive coils disposed on opposites sides of the printed circuit board substrate, wherein the coils each comprise conductive traces disposed in multiple printed circuit board layers and coupled together by inter-layer vias.

Example 15. The multilayered circuit of example 14, wherein the conductive traces of the coils are disposed in different layers than that elongate, conductive traces of the plates.

Example 16. The multilayered circuit of example 14 or 15, wherein the capacitors of the capacitive coupler are disposed within the aligned conductive coils of the magnetic coupler.

Example 17. The multilayered circuit of any one of examples 14 to 16, wherein the capacitors of the capacitive coupler are disposed between the aligned conductive coils of the magnetic coupler.

Example 18. The multilayered circuit of any one of examples 14 to 17, further comprising a second capacitive coupler including a second pair of capacitors each having one plate disposed on the first side of the printed circuit board substrate and another plate disposed on the second, opposite side of the printed circuit board substrate, wherein the second capacitive coupler is disposed between or within the aligned conductive coils of the magnetic coupler.

Example 19. A switching power converter, wherein:the switching power converter comprises a multilayered circuit according to any of examples 11 to 18;the plates of the capacitors disposed on the first side of the printed circuit board substrate are coupled to data transmission circuitry, wherein the data transmission circuitry is configured to generate voltage differences between the plates disposed on the first side; and the plates of the capacitors disposed on the second side of the printed circuit board substrate are coupled to data reception circuitry, wherein the data reception circuitry is configured to measure voltage differences between the plates disposed on the second side.

Example 20. The switching power converter of example 19, wherein the data transmission circuitry is configured to receive and transmit information related to regulation of the output of the power converter.

## Claims

1. An electrical system comprising:
an insulating substrate;
a magnetic coupler comprising coils disposed on opposites sides of the insulating substrate, wherein the coils are at least partially aligned such that a magnetic field generated by current flow through a first of the coils induces an electromotive force in a second of the coils; and
a capacitive coupler having plates disposed on opposites sides of the insulating substrate, wherein the plates comprises elongate conductors that are coupled together without forming loops and arranged at least partially beneath or in an interior of the coils of the magnetic coupler on the insulating substrate.

2. The electrical system of claim 1, wherein the capacitive coupler comprises two capacitors each having two plates, wherein the plates of each capacitor are disposed on opposites sides of the insulating substrate.

3. The electrical system of claim 1 or 2, wherein:
the insulating substrate includes a printed circuit board base; and
the plates of the capacitive coupler are in a single printed circuit board layer.

4. The electrical system of any one of claims 1 to 3, wherein:
the insulating substrate includes a printed circuit board base; and
the coils of the magnetic coupler comprise conductive traces disposed in multiple printed circuit board layers and coupled together by inter-layer vias.

5. The electrical system of any one of claims 1 to 4, wherein the elongate conductors of a first of the plates are directly opposite, on opposites sides of the insulating substrate, corresponding elongate conductors of a second of the plates.

6. The electrical system of any one of claims 1 to 5, wherein the elongate conductors are between 0.05 mm and 0.3 mm wide in a plane of the insulating substrate.

7. The electrical system of any one of claims 1 to 6, further comprising:
a second capacitive coupler having plates disposed on opposites sides of the insulating substrate and arranged at least partially beneath or in the interior of the coils of the magnetic coupler on the insulating substrate.

8. A switching power converter, wherein:
the switching power converter comprises an electrical system according to any preceding claim;
the coils of the magnetic coupler are primary and secondary windings of a power transfer element that is coupled to transfer power from a primary side of the power converter to a secondary side of the power converter; and
a first plate of the capacitive coupler is coupled to data transmission circuitry; and
a second plate of the capacitive coupler is coupled to data reception circuitry.

9. The switching power converter of claim 8, wherein:
the capacitive coupler comprises two capacitors each having two plates; and
the data reception circuitry is configured to reference voltage measurements on the second plate to voltage of a plate of a second of the capacitors.

10. The switching power converter of claim 8 or 9, wherein:
the switching power converter is configured to switch a power switch to control current flow through the primary winding at a frequency between 1 kHz and 25 MHz; and
the data transmission circuitry is configured to transmit signals at a frequency between 50 MHz and 1GHz.

11. The switching power converter of any one of claims 8 to 10, wherein the data transmission circuitry is configured to transmit information related to regulation of the output of the power converter.
